**Europäisches Patentamt**

**European Patent Office**

**Office européen des brevets**

(11) Veröffentlichungsnummer: **0 189 884**

**A2**

# EUROPÄISCHE PATENTANMELDUNG

(21) Anmeldenummer: **86101055.1**

(22) Anmeldetag: **27.01.86**

(51) Int. Cl.⁴: **A 61 C 9/00**

(30) Priorität: **29.01.85 AT 243/85**

(43) Veröffentlichungstag der Anmeldung:
**06.08.86 Patentblatt 86/32**

(84) Benannte Vertragsstaaten:
**AT BE CH DE FR GB IT LI LU NL SE**

(71) Anmelder: **Droschl, Helmut**
**Durgraben 18c**
**A-8010 Graz(AT)**

(71) Anmelder: **Bantleon, Hans-Peter**
**Ragnitzstrasse 170**
**A-8010 Graz(AT)**

(71) Anmelder: **Schitter, Fritz**
**Körblergasse 57**
**A-8010 Graz(AT)**

(72) Erfinder: **Droschl, Helmut**
**Durgraben 18c**
**A-8010 Graz(AT)**

(72) Erfinder: **Bantleon, Hans-Peter**
**Ragnitzstrasse 170**
**A-8010 Graz(AT)**

(72) Erfinder: **Schitter, Fritz**
**Körblergasse 57**
**A-8010 Graz(AT)**

(74) Vertreter: **Dipl.-Phys.Dr. Manitz Dipl.-Ing. Finsterwald**
**Dipl.-Ing. Grämkow Dipl.-Chem.Dr. Heyn**
**Dipl.-Phys.Rotermund,**
**B.Sc. Morgan Robert-Koch-Strasse 1**
**D-8000 München 22(DE)**

(54) Dentalinstrument zum Aufbringen von Positionierungsmarkierungen für Klebebrackets auf Zähnen.

(57) Bei einem Dentalinstrument zum Aufbringen von Positionierungsmarkierungen für Klebebracketsauf Zähnen, mit zumindest einem vertikalen Steher (3) für einen in vorbestimmter Höhe über einer Zahnschneidenauflage angeordneten horinzontalen Graphitminenhalter (4) steht ein Steher von einem endseitigen Quervorsprung (2) eines leistenförmigen flachen Grundkörpers (3) ab; am anderen Ende dieses Grundkörpers (1) ist ein identischer Quervorsprung (2') angeordnet, der einen weiteren Steher (3') für einen weiteren Graphitminenhalter (4') trägt, welcher gegenüber dem ersten Graphitminenhalter (4) in unterschiedlicher Höhe über der Zahnschneidenauflage (9') angeordnet ist.

EP 0 189 884 A2

Dentalinstrument zum Aufbringen von Positionierungsmarkierungen für Klebebrackets auf Zähnen

Die Erfindung betrifft ein Dentalinstrument zum Aufbringen von Markierungen auf Zähnen, insbesondere auf seitlichen Zähnen, zur nachfolgenden Positionierung von Klebebrackets.

Es ist bekannt, solche Markierungen mit Hilfe einer Meßeinrichtung aufzubringen, die an der Zahnschneide horinzontal angelegt wird und einen Steher für einen horinzontalen Halter für eine Graphitmine trägt, mit der die Markierung vorgenommen wird. Der Halter ist dabei in einer vorbestimmten Höhe von der Schneide, z.B. 3,5 mm angeordnet. Um Markierungen in unterschiedlichen Höhen von der Zahnschneide vornehmen zu können, weist die Meßeinrichtung vier kreuzförmig angeordnete Arme auf, an deren Enden je ein Steher für einen Graphitminenhalter und eine Auflagefläche für die Schneide vorgesehen sind.

Dieses bekannte Instrument ist jedoch in der Handhabung etwas kompliziert und hat ausserdem den Nachteil, daß mit ihm Markierungen Ordnungsgemäß nur an den Vorderzähnen aufgebracht werden können.

Die Erfindung zielt nun darauf ab, ein Instrument der einleitend angegebenen Art zu schaffen, welches gegenüber der bekannten Vorrichtung eine einfachere Ausbildung hat und die Anringung von Markierungen auch an den seitlichen Zähnen gestattet. Ausserdem soll die Erfindung auch der Vornahme von Markierungen in verschiedenen Höhen von der Zahnschneide ermöglichen.

Die Aufgabe der Erfindung ist durch die im kennzeichnenden Teil des Patentanspruch 1 angegebenen Merkmale gelöst. Eine vorteilhafte Ausgestaltung des Instumentes ist in einem zweiten Patentanspruch angegeben.

Die erfindungsgemäße Ausbildung gewährleistet eine einfache Handhabung des Instrumentes wegen der relativ großen Angriffsfläche am Grundkörper für die Finger und wegen der relativ großen Hebelwirkung zur Stabilisierung des Instumentes, und eignet sich speziell für das Markieren von seitlichen Zähnen, die infolge der langgestreckten Form des Grundkörpers leicht zugänglich sind.

**0189884**

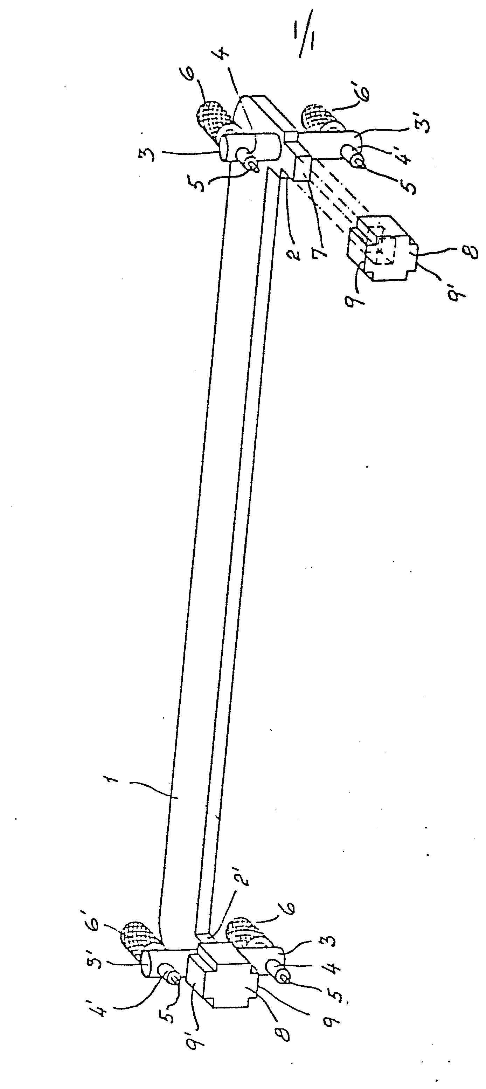

Nachstehend ist eine Ausführungsform des erfindungsgemäßen Instrumentes anhand einer Zeichnung beschrieben. Die Zeichnung zeigt eine perspektivische Ansicht des erfindungsgemäßen Dentalinstrumentes.

Ein leistenförmiger flacher, im wesentlichen rechteckiger Grundkörper 1 aus Metall , an welchem das Instrument mit der Hand ergriffen wird, weist an beiden Enden auf seiner Schmalseiten je einen Quervorsprung 2 bzw.2' auf, so daß sich insgesamt in der Draufsicht eine im wesentlichen U-förmige Konfiguration ergibt. Von dem in der Zeichnung rechten Vorsprung 2 steht ein zylindrischer Steher 3 senkrecht ab, der in vorbestimmter Höhe über dem Quervorsprung einen sich parallel zum Quervorsprung erstreckenden zylindrischen Halter 4 für eine Graphitmine 5 trägt. Das hintere Ende des Halters 4 hat einen (nicht gezeigten) Gewindeabschnitt mit Längsschlitzen, auf den eine Rändelhülse 6 aufgeschraubt ist, mit der die Graphitmine 5 festgespannt wird.

Der Quervorsprung 2 hat an seiner Stirnseite einen rechteckigen Ansatz 7, auf dem ein im wesentlichen kubischer Kunstoffschuh 8 aufsteckbar ist, der eine Auflagefläche 9 für die Zahnschneide bildet.

Wie aus der Zeichnung ersichtlich, ist auf dem anderen Quervorsprung 2' des Grundkörpers 1 ein weiterer gleichartiger Steher 3' vorgesehen, der einen gleichartigen Halter 4', jedoch in gegenüber dem Halter 4 unterschiedlicher Höhe vom Vorsprung 2' bzw.von der zugehörigen Zahnschneidenauflage 9' trägt.

Ferner sind auch an der Unterseite des Grundkörpers 1 auf den Vorsprüngen 2, 2' Steher mit Haltern vorgesehen. Die Anordnung ist so getroffen, daß durch Wenden des Grundkörpers um 180° um eine Querachse durch seine Längsmitte wieder die dargestellte Konfiguration des Instrumentes vorliegt. Für entsprechende Teile aller Makieranordnungen sind in der Zeichnung die gleichen Bezugsziffern verwendet worden

Die Erfindung ist nicht auf das dargestellt Ausführungsbeispiel beschränkt, dieses kann vielmehr im Rahmen des allgemeinen Erfindungsgedanken verschiedentlich abgewndelt werden, insbesondere hinsichtlich der Ausbildung der Halter und der Zahnschneidenauflagen.

Patentansprüche

1. Dentalinstrument zum Aufbringen von Markierungen auf Zähnen, insbesondere auf seitlichen Zähnen, zur nachfolgenden Positionierung von Klebebrackets, mit zumindest einem an die Zahnschneide anlegbarem Körper, der einen vertikalen Steher für einen in vorbestimmter Höhe über einer Zahnschneideauflage angeordneten horinzontalen Graphitminenhalter trägt, d a d u r c h   g e k e n n z e i c h n e t, daß der Steher (3) von einem endseitigen Quervorsprung (2) eines leistenförmigen Grundkörper (1) absteht, und daß am anderen Ende dieses Grundkörpers ein identischer Quervorsprung (2') angeordnet ist, der einen weiteren Steher (3') für einen weiteren Graphitminenhalter (4') trägt, der gegenüber dem ersten Halter (4) in unterschiedlicher Höhe über der Zahnschneidenauflage (9') angeordnet ist.

2. Dentalinstrument nach Anspruch 1, d a d u r c h   g e k e n n z e i c h n e t, daß die Quervorsprünge (2, 2') des Grundkörpers (1) auf beiden Seiten Steher (3, 3') für jeweils gleichartige Halter (4, 4') aufweisen und das Instrument bezüglich einer Querachse durch seine Längsmitte wendbar ist.

0189884